# FASCICULE DE BREVET EUROPEEN

(11) **EP 2 466 470 B1**
(45) Date de publication et mention de la délivrance du brevet: **07.02.2018**
(21) Numéro de dépôt: 11193552.4
(22) Date de dépôt: 14.12.2011
(51) Int. Cl.: G06F 11/36

(54) **Module matériel de sécurité et procédé de traitement dans un tel module**
Hardware-Sicherheitsmodul und Verarbeitungsverfahren in solchem Modul
Hardware security module and processing method in such a module

(30) Priorité: 17.12.2010 FR 1060725
(43) Date de publication de la demande: 20.06.2012
(73) Titulaire: Oberthur Technologies, 92700 Colombes (FR)
(72) Inventeur: Boisde, Matthieu, F-33850 Leognan (FR); Bousquet, Nicolas, 33600 Pessac (FR)
(74) Mandataire: Santarelli

(56) Documents cités:
- WO-A1-00/68797
- WO-A1-2005/076139
- WO-A1-2009/016525
- US-A- 5 896 536
- US-A1- 2002 099 953
- Anonymous: "Arm Security Technology: Building a Secure System using TrustZone Technology", ARM, 30 avril 2009 (2009-04-30), pages I-Glossary-4, XP002660015, Extrait de l'Internet: URL:http://infocenter.arm.com/help/topic/c om.arm.doc.prd29-genc-009492c/PRD29-GENC-0 09492C_trustzone_security_whitepaper.pdf [extrait le 2011-09-27]
- Anonymous: "CoreSight ETM11 Revision: r1p1 Technical Reference Manual", ARM, 17 mai 2007 (2007-05-17), pages I-Glossary-10, XP002660025, Extrait de l'Internet: URL:http://infocenter.arm.com/help/topic/c om.arm.doc.ddi0318e/DDI0318E_cs_etm11_r1p1 _trm.pdf [extrait le 2011-09-27]

## Description

La présente invention concerne le domaine des traitements au sein de modules matériels de sécurité (HSM ou *"hardware security module"*) en vue de transmettre des données à des entités externes aux modules.

L'invention concerne plus particulièrement un procédé de traitement et un module matériel de sécurité mettant en oeuvre un tel traitement. Il peut s'agit par exemple d'un traitement de type débogage (ou *"debugging"* selon la terminologie anglo-saxonne) de programmes ou applications informatiques dans les environnements fermés de tels modules matériels de sécurité, ou d'un traitement de type accès à des données mémorisées dans ces modules.

Un module matériel de sécurité peut revêtir la forme d'une carte à microprocesseur ou "carte à puce" (également connues sous la terminologie *"smart card",* par exemple une carte dotée d'un module sécurisé telle une carte SIM), d'une clé USB sécurisée à microprocesseur, d'un module sécurisé de passeport biométrique, etc.

Un programme informatique regroupe un ensemble d'instructions dont l'enchaînement par leur exécution permet de réaliser une opération ou un ensemble d'opérations souhaitées par le programmeur.

Les modules matériels de sécurité peuvent exécuter un tel programme sur réception d'une commande correspondante en provenance d'une entité externe. Ici et pour la suite, la notion d'"*externe*" est relative à l'appartenance d'un élément ou non au module matériel de sécurité HSM considéré.

En effet, les modules matériels de sécurité, typiquement les cartes à microprocesseur, s'inscrivent dans une relation maître/esclave (similaire à un mode client/serveur), dans laquelle l'entité externe envoie des commandes que le module HSM exécute. Cette exécution peut entraîner celle de programmes qu'il contient, et fournit en réponse des données générées une fois l'exécution terminée.

A titre d'exemple, ces échanges maître/esclave peuvent reposer sur le protocole ISO 7816 ou le protocole ISO 14443.

De tels protocoles gérant les échanges maître/esclave peuvent toutefois présenter des inconvénients, comme par exemple limiter la taille maximale des données qui sont retournées par le module HSM en réponse à une commande préalable. Ainsi, lorsqu'un fichier volumineux est décrypté dans le module HSM, sa transmission peut être confrontée aux limitations du protocole mis en oeuvre et être tronquée voire annulée.

En outre, les liens physiques supportant ces protocoles peuvent également présenter des limites de débit, ne permettant pas au module HSM de communiquer, par exemple en "temps réel" ou rapidement, un grand nombre de données tel l'intégralité du fichier volumineux décrypté introduit précédemment.

Il existe donc un besoin d'améliorer les mécanismes de traitement par des modules matériels de sécurité dans un contexte de transmission de données à une entité externe.

Une telle difficulté existe également dans le contexte du débogage d'un programme informatique comme introduit précédemment.

De façon connue en soi, le débogage d'un programme informatique vise l'activité et les démarches qui consistent à détecter, diagnostiquer et corriger des bogues ou *bugs,* c'est-à-dire les causes de dysfonctionnements du programme.

Les causes de dysfonctionnements peuvent résulter d'erreurs de programmation, mais également d'incompatibilités ou d'une mauvaise gestion entre le code du programme et les ressources matérielles disponibles lors de l'exécution du programme.

Classiquement, les programmes informatiques ou *software* sont écrits dans un langage de programmation (code source), débogués depuis le code source puis compilés, le tout au sein d'un environnement de développement intégré (*EDI* ou *IDE* en anglais pour *"Integrated Development Environment"*) regroupant l'ensemble des outils pour le développement de logiciels. Les environnements de développement sont, pour des raisons de coûts, exécutés la plupart du temps sur des ordinateurs personnels (PC pour *"personnal computer"*).

Ainsi, un programmeur peut tester un programme développé en l'exécutant pas à pas depuis son code source (on parle de "débogage en ligne"), c'est-à-dire instruction après instruction, ou en y insérant des instructions supplémentaires, appelées instructions de débogage, dont l'exécution ne vient pas modifier la réalisation de l'opération ou des opérations du programme.

Les instructions de débogage peuvent par exemple imprimer, enregistrer ou simplement afficher des valeurs courantes de variables internes au programme, telles que les valeurs mémorisées dans la pile d'exécution (ou *"runtime stack*")*.*

Lorsque le processus de débogage est terminé, les instructions de débogage sont supprimées du code source et ce dernier est compilé pour obtenir un programme compilé exécutable, c'est-à-dire une version de production du programme. Il est alors chargé en mémoire de la plateforme matérielle dans laquelle il est destiné à être exécuté, cette plateforme lui offrant un environnement d'exécution, illustré par exemple par le système d'exploitation qu'elle comprend.

Le programme compilé peut par exemple être chargé en mémoire ROM ou EEPROM (pour "*Electrically-Erasable Programmable Read-Only Memory*") d'un module matériel de sécurité.

Les modules matériels de sécurité présentent toutefois des particularités matérielles et/ou logicielles (par exemple relatives au système d'exploitation) par rapport aux ordinateurs personnels dans lesquels sont mis en oeuvre les environnements de développement, notamment en ce qu'ils embarquent de faibles ressources et sont conçues pour révéler le minimum d'information sur leur fonctionnement interne.

Il est ainsi classique d'avoir recours, au sein d'un environnement de développement sur PC, à des émulateurs de module matériel de sécurité., et d'exécuter ces émulateurs pour reproduire, de la façon la plus fidèle possible, un environnement d'exécution du module matériel de sécurité.

Il arrive cependant qu'un programme compilé ne soit pas satisfaisant et requière un nouveau débogage, par exemple parce que toutes les situations n'auraient pas été testées lors de précédents débogages. Dans ce cas, il est courant de reprendre le code source correspondant et de le tester à nouveau dans l'environnement de développement.

Cette approche s'avère satisfaisante lorsque l'environnement de développement est sensiblement similaire à celui d'exécution du programme, une fois ce dernier compilé. En effet, dans ce cas, les dysfonctionnements observés à l'aide du programme compilé sont susceptibles d'être reproduits dans l'environnement de développement et peuvent alors être corrigés.

Toutefois, ce n'est pas toujours le cas pour les modules matériels de sécurité en raison des divergences mentionnées précédemment mais également parce que ces modules peuvent subir des personnalisations faites par un client (par exemple une banque) ou avoir des composants matériels réalisant des fautes imprévues liées à leurs caractéristiques individuelles. Il est dans ce cas difficilement envisageable d'ajuster les émulateurs, voire impossible lorsque des caractéristiques individuelles propres à chaque module HSM rentrent en ligne de compte.

Ces divergences sont en outre difficilement déterminables et observables en raison du caractère fermé des modules matériels de sécurité, résultant par exemple de protections sécuritaires qu'ils mettent en oeuvre pour révéler le minimum de leur fonctionnement interne.

Ainsi, les émulateurs de module matériel de sécurité utilisés pour le développement de programmes reposent généralement sur une modélisation imparfaite de l'environnement d'exécution du module HSM.

Il en résulte que certains dysfonctionnements observés lors de l'exécution du programme compilé dans un module matériel de sécurité ne peuvent être reproduits par le code source correspondant lorsque ce dernier est exécuté dans l'environnement de développement, et ce malgré l'utilisation d'émulateurs.

Cette difficulté, présente dans le cas des modules matériels de sécurité, engendre par conséquent des coûts supplémentaires, parfois incontrôlés, pour déboguer un programme informatique et fournir une version compilée "propre".

Il existe également des architectures matérielles sécurisées de processeurs dotées d'une infrastructure de débogage comme exposé dans les documents « *ARM Security Technology : Building a Secure System using TrustZone*® *Technology*» et « *CoreSight*™ *ETM11*™*, Revision: r1p1 : Technical Reference Manual »*

On connaît également, de la publication US 2002/099953, une méthode de débogage maître/esclave pour carte à puce dans laquelle une logique au niveau d'un pilote de carte permet de détecter lorsqu'une réponse comprend des informations de débogage, auquel cas la réponse est envoyée à un logiciel de débogage.

Dans un mode de réalisation de la présente invention, cette dernière entend fournir une amélioration des systèmes et procédés de l'état de la technique aux fins de débogage.

Toutefois, la mise en oeuvre de moyens de débogage introduit également des difficultés relatives à la transmission des données (de débogage) générées. En effet, cette transmission doit autant que possible ne pas modifier l'environnement ou contexte d'exécution du programme compilé, afin d'obtenir des données de débogage les plus conformes que possible.

C'est dans ces différents contextes, que la présente invention entend fournir une amélioration des traitements dans les modules HSM, aux fins de transmettre des données générées localement à une entité externe.

Dans ce dessein, l'invention concerne notamment un module matériel de sécurité tel que défini dans la revendication 1.

Ce module matériel de sécurité comprend un microprocesseur et un programme exécutable par ledit microprocesseur pour réaliser une opération, le module matériel de sécurité étant configuré pour recevoir et transmettre, selon un mode de communication maître/esclave avec une entité maître externe, au moins respectivement une commande de réalisation de l'opération et une réponse correspondante. Il est en outre configuré pour :
- en réponse à la réception de la commande, générer des données,
- transmettre, à destination d'une entité externe et sur un canal de communication initié par lui, lesdites données générées.

L'invention permet ainsi d'améliorer substantiellement les traitements réalisés au niveau d'un module matériel de sécurité. Cela résulte de la mise en oeuvre du canal de communication à l'initiative du module HSM pour transporter les données dont la génération est déclenchée par la réception de la commande.

On notera que l'initiation d'un canal de communication par le module HSM prend le contre-pied des techniques classiques où le module HSM est "vu" comme un esclave de l'entité maître externe.

Pour illustrer cette amélioration grâce à l'invention, dans le cas de l'accès à un fichier crypté évoqué précédemment, l'approche selon la présente invention permet de s'affranchir des limitations protocolaires de l'ISO 7816, par exemple lorsque les données générées à transmettre sont trop volumineuses pour être transmises en temps réel ou rapidement.

Dans le cas du débogage, le recours à ce canal de communication initié par le module HSM pour transmettre des données de débogage, permet de conserver la relation maître/esclave inchangée (il n'est pas nécessaire de prévoir des commandes particulières pour récupérer ces données de débogage), et donc d'effectuer un éventuel débogage dans des conditions optimum (correspondant aux conditions exactes de production). Elle permet en outre de restituer ces données de débogage en temps réel ou quasiment en temps réel.

Dans un mode de réalisation de l'invention, les échanges maître/esclave et les données générées sont transmis sur deux liaisons physiques distinctes vers l'extérieur du module matériel de sécurité. Ce peut être par exemple deux contacts électriques distincts parmi les huit contacts de l'interface physique d'une carte à microprocesseur conforme à la norme ISO 7816.

En variante, les échanges maître/esclave et les données générées peuvent être transmis sur une même liaison physique. Par exemple, un multiplexage de ces échanges et données générées sur cette même liaison physique peut être mise en oeuvre afin d'avoir une transmission en (quasi) temps réel des données générées: multiplexage sur une liaison USB de commandes/réponses APDU et des données générées (de débogage par exemple).

Selon une réalisation de l'invention relative au débogage :
- le programme est un programme compilé comprenant au moins une instruction de débogage dont l'exécution ou non ne modifie pas celle de ladite opération, et
- le module matériel de sécurité est configuré pour transmettre, lors de l'exécution du programme compilé, des données générées, dites de débogage, résultant de l'exécution de l'instruction de débogage sur ledit canal de communication initié par le module matériel de sécurité.

L'entité externe prévue à l'extrémité du canal de communication peut ainsi tirer partie des résultats des instructions de débogage, également nommés informations de débogage, pour identifier un dysfonctionnement. De façon classique il peut s'agir d'un simple affichage de ces résultats (correspondant par exemple à des valeurs de variables internes) à un utilisateur pour que ce dernier en déduise le dysfonctionnement.

Ce mode de réalisation permet de réaliser un débogage en temps réel dans les conditions exactes d'exécution du programme à déboguer.

En effet, d'une part c'est le programme compilé qui est testé. Cela est rendu possible par l'intégration des instructions de débogage au sein même de ce programme compilé.

D'autre part, la transmission sur deux canaux de communication distincts (aussi bien logiques que physiques, d'un côté le canal pour les échanges maître/esclave [par exemple des échanges APDU pour *"application protocol data unit*"] et de l'autre, le canal initié par le module HSM lui-même) des données relatives à l'opération et des informations de débogage permet de conserver la relation maître/esclave inchangée, ce qui correspond aux conditions exactes de production.

Selon une caractéristique particulière, l'au moins une instruction de débogage met en oeuvre une commande d'écriture des données de débogage générées sur une socket UDP créée par le module matériel de sécurité, éventuellement via l'appel d'une routine ou d'une sous-fonction. La gestion des informations de débogage selon cette configuration permet d'éviter de trop solliciter d'autres programmes du module HSM (tel que le système d'exploitation), afin de conserver un environnement d'exécution conforme à un environnement de production.

Dans un mode de réalisation, le module matériel de sécurité comprend un moyen d'inhibition ou d'activation de l'instruction de débogage lors de l'exécution du programme compilé. L'inhibition de l'instruction de débogage consiste à ce que cette dernière ne soit pas exécutée lors de l'exécution du programme compilé, au contraire de son activation. L'inhibition ou l'activation peut être mise en oeuvre dans le code du programme compilé sous forme d'instruction conditionnelle basée sur une information d'inhibition.

Cette disposition permet d'améliorer les performances d'exécution du programme compilé lors de son exploitation, en évitant le temps de traitement relatif aux instructions de débogage désormais inutiles.

En particulier, le moyen d'inhibition ou d'activation est modifiable en réponse à une commande reçue de l'entité maître externe.

Cette disposition permet de contrôler de façon externe les moments où le débogage a lieu. Notamment, comme le débogage est plus efficace s'il a lieu dans le cadre de tests prédéfinis (c'est-à-dire en exécutant un script test externe qui vient déclencher et piloter l'exécution du programme compilé), l'inhibition ou l'activation peut être étroitement liée au script de test, via par exemple l'intégration dans ce script externe d'une commande d'activation (au début du script) et d'une commande d'inhibition (en fin de script).

Selon une caractéristique particulière, le moyen d'inhibition ou d'activation est protégé en modification par un mécanisme cryptographique de sécurité. Dans le contexte où d'un côté le module matériel de sécurité est conçu pour révéler a *minima* son fonctionnement interne et d'un autre côté les instructions de débogage vise à révéler une partie de celui-ci, cette disposition permet de garantir un niveau raisonnable de sécurité pour éviter de dévoiler, sans droit, des informations de ce fonctionnement interne.

Selon une autre caractéristique particulière, ledit moyen d'inhibition ou d'activation comprend une information mémorisée dans une mémoire programmable une seule fois de sorte qu'une inhibition de l'instruction de débogage soit définitive. Ainsi, généralement l'information prend initialement une valeur correspondant à un état d'activation (permettant donc initialement d'effectuer un débogage), puis prend, de façon définitive en raison de la nature de la mémoire, une valeur d'inhibition dès lors que les tests de débogage sont finis.

Cette disposition offre un niveau supérieur de sécurité dans la mesure où, dès l'inhibition, le module matériel de sécurité retrouve de façon définitive sa configuration première, à savoir révéler a *minima* son fonctionnement interne.

On notera d'ailleurs que cette information peut être utilisée dans les instructions conditionnelles évoquées précédemment pour autoriser ou non l'exécution d'une instruction de débogage.

Selon une autre réalisation de l'invention relative à l'accès à des données mémorisées dans le module HSM, la commande reçue de l'entité maître externe est une commande d'accès à un fichier crypté mémorisé en mémoire dudit module matériel sécurisé, et les données générées transmises sur le canal de communication initié par le module matériel de sécurité sont des données décryptées dudit fichier.

Ainsi, les données générées ne sont pas transmises dans une réponse (type APDU) prenant place au sein des échanges maître/esclave.

Comme évoqué précédemment, cette disposition permet de s'affranchir de certaines limitations de protocoles tels que ISO 7816, pour transmettre des données d'une carte à puce à un lecteur externe.

Dans un mode de réalisation, le module matériel de sécurité est configuré pour créer une socket UDP (pour *"User Datagram Protocol*") de communication de données sur un lien de communication avec l'entité externe et pour transmettre les données générées via ladite socket UDP.

Dans cette configuration, la transmission des données générées (par exemple informations de débogage) est aisément initiée par le module HSM. Pour rappel, le mode UDP est un mode non connecté.

Dans le cadre du débogage, l'absence d'établissement préalable et de gestion d'une connexion permet de concentrer les traitements du module HSM à la seule exécution du programme compilé. Ainsi, l'utilisation d'une socket UDP plutôt qu'une socket en mode connecté (laquelle serait possible) permet d'obtenir un environnement d'exécution conforme à un environnement de production, nullement modifié par des traitements supplémentaires.

En particulier, le lien de communication avec l'entité externe met en oeuvre un protocole de couche physique de type USB (pour "*Universal Serial Bus*")*.* Un tel protocole présente l'avantage de permettre aisément le multiplexage du canal de communication maître/esclave et du canal de communication sur socket UDP.

Cela permet par exemple de mettre en oeuvre ces deux canaux simultanément sur une même liaison physique avec l'entité externe.

En variantes toutefois, le lien de communication avec l'entité externe peut mettre en oeuvre un protocole de couche physique de type Bluetooth (marque déposée) ou de type ISO 7816 ou ISO 14443 ou NFC.

Selon une caractéristique de l'invention, le module matériel de sécurité peut être configuré pour crypter les données de débogage transmises sur le canal de communication qu'il initie, permettant de sécuriser les opérations de débogage vis-à-vis du fonctionnement interne du module sécurisé qui doit rester autant que possible non révélé.

Corrélativement, l'invention concerne également un procédé de traitement dans un module matériel de sécurité tel que défini dans la revendication 10.

Le module matériel de sécurité comprend un microprocesseur et un programme exécutable par ledit microprocesseur pour réaliser une opération, le module matériel de sécurité étant configuré pour recevoir et transmettre, selon un mode de communication maître/esclave avec une entité maître externe, au moins respectivement une commande de réalisation de l'opération et une réponse correspondante. Le procédé comprend les étapes suivantes : en réponse à la réception de la commande, générer des données au niveau du module matériel de sécurité, transmettre, à destination d'une entité externe et sur un canal de communication initié par le module matériel de sécurité, lesdites données générées.

Le procédé de traitement présente des avantages similaires à ceux du module HSM exposé ci-dessus. Par exemple dans le cadre d'opérations de débogage, il permet de réaliser en temps réel des opérations de débogage de programmes compilés dans leur propre environnement d'exécution dit "de production", sans passer par des émulateurs imparfaits. Dans le cadre d'opérations d'accès à des données, il permet de s'affranchir d'éventuelles limitations en volume de données introduites par des protocoles de communication maître/esclave.

De façon optionnelle, le procédé peut comprendre des étapes et caractéristiques se rapportant aux moyens et caractéristiques du module HSM.

Et notamment, il peut être prévu que les échanges maître/esclave sont relatifs à la réalisation de ladite opération avec l'entité maître externe, que le programme est un programme compilé comprenant au moins une instruction de débogage dont l'exécution ou non ne modifie pas celle de ladite opération, que le procédé comprend la transmission, lors de l'exécution du programme compilé, de données générées, dites de débogage, résultant de l'exécution de l'instruction de débogage sur ledit canal de communication initié par le module matériel de sécurité.

Selon une autre caractéristique, il peut être prévu préalablement à l'exécution du programme compilé, une étape d'inhibition ou d'activation de l'instruction de débogage en fonction d'une commande émise au niveau de l'entité maître externe.

Selon un aspect particulier permettant de sécuriser l'accès à des données internes du module HSM carte via l'accès aux résultats des instructions de débogage, il peut être prévu une étape d'authentification pour permettre la modification d'un état d'inhibition ou d'activation de l'instruction de débogage en réponse à la commande émise au niveau de l'entité maître externe.

Enfin, pour empêcher définitivement cet accès, par exemple à la fin d'opérations de débogage, il peut être prévu que l'état d'inhibition ou d'activation est mémorisé dans une mémoire programmable une seule fois du module matériel de sécurité, de sorte qu'une inhibition de l'instruction de débogage soit définitive.

Selon une caractéristique particulière, le procédé comprend une étape d'exécution d'un script test sur une entité externe pour piloter l'exécution du programme compilé via les échanges maître/esclave.

Dans une réalisation de l'invention, une commande reçue de l'entité maître externe est une commande d'accès à un fichier crypté, et les données générées transmises sur le canal de communication initié par le module matériel de sécurité sont des données décryptées dudit fichier.

Dans un mode de réalisation de l'invention, il peut être prévu la création, au niveau du module matériel de sécurité, d'une socket UDP de communication de données sur un lien de communication avec l'entité externe, et la transmission des données générées sur ladite socket UDP.

Un autre objet de la présente invention concerne un téléphone mobile comprenant une interface de communication sans contact et un module matériel de sécurité tel que décrit ci-dessus et comprenant un premier contact électrique relié à ladite interface de communication sans contact,
téléphone mobile dans lequel le canal de communication avec l'entité maître externe (i.e. pour la communication maître/esclave pour recevoir et transmettre au moins la commande de réalisation de l'opération et la réponse correspondante) et le canal de communication initié par le module matériel de sécurité avec l'autre entité externe sont, l'un, conforme à une norme de communication sans contact via le premier contact électrique et, l'autre, conforme à une norme de communication avec contact via un deuxième contact électrique du module matériel de sécurité.

Comme cela ressortira de la description ci-dessous, l'interface de communication sans contact équipant le téléphone mobile peut être de type NFC, le module matériel communiquant avec cette interface par le biais du protocole SWP. Pour sa part, la norme de communication avec contact peut revêtir toute norme classique pour les cartes à microprocesseur, par exemple la norme ISO 7815 s'appuyant sur le contact C7 des cartes à puce à contact.

D'autres particularités et avantages de l'invention apparaîtront dans la description ci-après, illustrée par les dessins ci-joints, dans lesquels :
- la **figure 1** illustre un système de débogage en mode "différé", utilisant une connexion classique ISO 7816 ;
- la **figure 2** illustre des échanges de données entre la carte à microprocesseur et un équipement de test, dans le mode différé de la **figure 1** ;
- la **figure 3** illustre un exemple simplifié de programme compilé (dans sa version source) incluant des instructions de débogage selon un mode de réalisation de l'invention ;
- la **figure 4** illustre un système de débogage en mode "temps réel" selon l'invention, utilisant une connexion USB ;
- la **figure 5** illustre des échanges de données entre la carte à microprocesseur et un équipement de test, dans le mode temps réel de la **figure 4** ; et
- la **figure 6** illustre une configuration de mise en oeuvre de l'invention pour un module matériel de sécurité intégré à un téléphone mobile doté d'une interface de communication sans contact de type NFC.

La présente invention s'applique à tout type de module matériel de sécurité. Pour les besoins d'illustration uniquement, il est fait référence pour la suite à une carte à microprocesseur (ou "carte à puce"). Un module matériel est dit de sécurité par exemple s'il est conforme à une norme relative à la sécurité, par exemple s'il est conforme aux critères communs et/ou à la norme "FIPS 140" (pour "*Federal Information Processing Standard").*

On décrit tout d'abord la mise en oeuvre de l'invention dans un contexte de débogage.

Les cartes à microprocesseur comprennent des programmes compilés qu'elles peuvent exécuter sur commande d'une entité externe. Comme décrit ci-après, des exemples de réalisation de l'invention mettent en oeuvre au niveau d'une carte à microprocesseur un tel programme compilé dans lequel des instructions de débogage ont été conservées, en plus des instructions destinées à réaliser l'opération ou fonction première dudit programme.

Les instructions de débogage sont exécutées lors de phase de tests. C'est ainsi qu'un programme ou script de test maître est généralement conçu pour venir piloter l'exécution du programme compilé, par l'envoi de commandes vers la carte à microprocesseur. Le script de test n'est rien d'autre qu'un programme potentiellement de production dont certains paramètres sont fixés et connus de sorte à définir des tests.

Les instructions de débogage sont alors exécutées lors de l'exécution du programme compilé, et fournissent, à un logiciel de débogage (lequel peut être distinct d'un logiciel contenant le script de test), des informations de débogage pertinentes relatives à cette exécution du programme compilé dans un environnement d'exécution de production, ici dans le système d'exploitation de la carte à microprocesseur.

Il est ainsi possible de comparer les résultats obtenus des instructions de débogage avec des résultats attendus.

Le script de test est par exemple dans un équipement externe muni d'un lecteur de carte à microprocesseur et peut dialoguer, selon un mode maître/esclave, avec la carte à microprocesseur à l'aide de protocoles classiques, par exemple selon la norme ISO 7816 mettant en oeuvre des commandes et réponses APDU.

Dans une configuration d'utilisation normale du programme compilé ("conditions de production"), ces échanges entre le script de test et la carte ne concernent pas les instructions de débogage car les scripts de test représentent les conditions normales d'exécution du programme compilé et accèdent donc au programme compilé dans la carte à microprocesseur uniquement pour y réaliser l'opération première du programme compilé, certes avec éventuellement certains paramètres de test prédéfinis.

Comme les instructions de débogage viennent accroître la taille du programme compilé, on veillera à en limiter le nombre et à les placer de façon judicieuse en fonction des enchaînements algorithmiques du programme, de sorte à satisfaire les ressources limitées des cartes à microprocesseur (par exemple la capacité de la mémoire morte).

Outre l'augmentation de la taille du code compilé, ces instructions de débogage introduisent une augmentation du temps d'exécution du programme compilé.

Ainsi, sous certaines conditions d'opération, les instructions de débogage pourront être désactivées de sorte à ne pas être exécutées lors de l'exécution du programme compilé les contenant. Cela permet de réduire le temps d'exécution du programme compilé lors de son utilisation en production.

Compte tenu du fait que les scripts de test représentent des conditions normales d'exécution du programme, les échanges (type ADPU) avec la carte à microprocesseur ne sont pas conçus pour fournir, au lecteur de carte (là où l'utilisateur testeur a accès), les résultats de l'exécution des instructions de débogage.

En outre, s'il avait fallu les récupérer à l'aide de commandes APDU, de nombreuses et complexes adaptations seraient nécessaires pour s'assurer qu'une commande APDU soit générée à chaque instruction de débogage afin d'en récupérer le résultat. Or ces adaptations ne sont pas envisageables.

Il est alors prévu d'avoir recours à un autre canal de communication (différent de la relation maître/esclave des commandes APDU) créé et utilisé à l'initiative de la carte à microprocesseur (et non plus d'un lecteur de carte), afin de communiquer les résultats de l'exécution des instructions de débogage.

Ces deux canaux de communication sont de nature différente (donc logiquement différents), mais peuvent également être, de surcroît, distincts physiquement, par exemple via deux connexions physiques distinctes entre la carte et le lecteur de carte. On garantit ainsi que la configuration dans laquelle le programme compilé est exécuté est la plus conforme possible de la configuration de production.

On illustre maintenant l'invention en référence à diverses réalisations de systèmes de débogage.

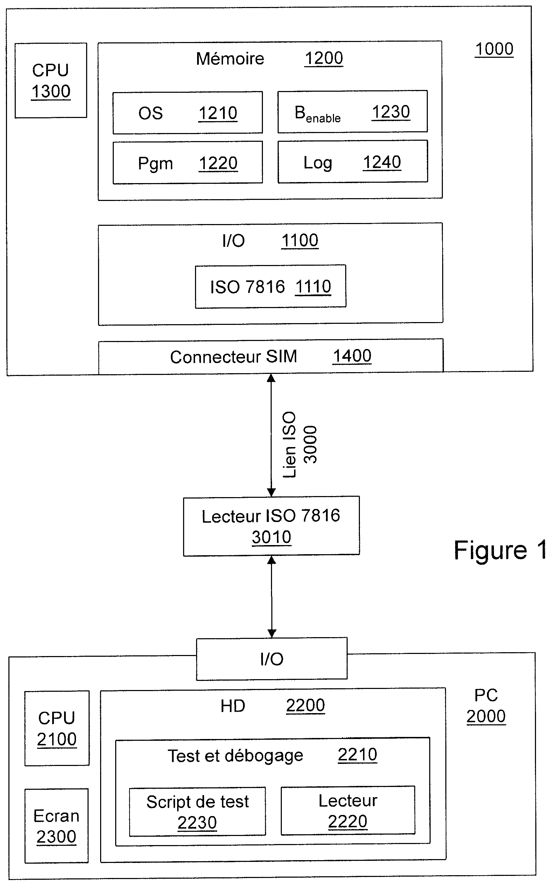

La **figure 1** illustre un système de débogage utilisant une connexion classique ISO 7816, sur laquelle sont mis en oeuvre des échanges de messages APDU.

Cette connexion présente l'inconvénient de ne permettre qu'une communication à la fois, c'est-à-dire un seul canal de communication à un instant donné. Pour cette raison, le mode de réalisation correspondant à cette figure est appelé par la suite "mode différé", en ce que les résultats des instructions de débogage (le canal initié par la carte) ne peuvent être transmis en même temps que le script de test échange (le canal maître/esclave) avec la carte pour l'exécution du programme compilé. Ces résultats seront donc transmis sur la liaison ISO 7816, successivement à la fin de l'utilisation du premier canal de communication (c'est-à-dire généralement à la fin de l'exécution du script de test).

Pour cette raison, ce mode de réalisation ne fournit pas, à proprement parler, les informations de débogage en temps réel. Il est toutefois conservé ici pour illustrer le mode de réalisation suivant correspondant à une réalisation de l'invention.

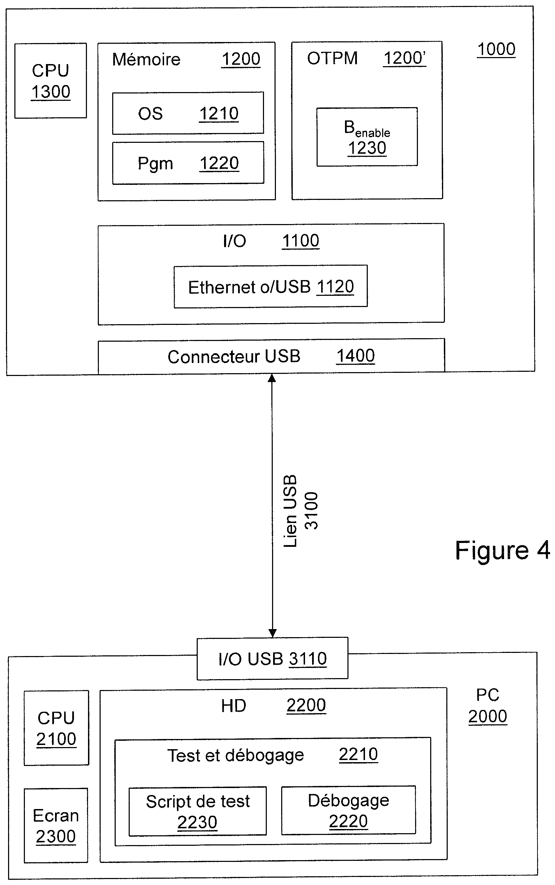

La **figure 4** illustre un système de débogage équivalent utilisant, en revanche, une connexion autorisant plusieurs communications simultanées, par exemple une connexion USB.

Il est en effet maintenant établi que certaines cartes à microcontrôleur présentent une interface USB permettant plusieurs communications parallèles entre le lecteur de carte et cette carte.

Le mode de réalisation de l'invention correspondant à cette figure est appelé par la suite "mode temps réel" en ce que les résultats des instructions de débogage peut être directement transmis à l'entité externe dès l'exécution de ces instructions. Les échanges avec le script de test (le canal maître/esclave) et la transmission des résultats des instructions de débogage (le canal initié par la carte) peuvent alors être simultanés sur la même liaison physique USB entre la carte à microprocesseur et le lecteur de carte.

Bien entendu, d'autres configurations sont envisageables. Par exemple, si la carte à microprocesseur dispose de deux interfaces de communication (donc deux liaisons physiques, par exemple l'une par contact ISO 7816 ou USB avec l'entité externe détenant le script test, et l'autre sans contact, par exemple ISO 14443 avec l'entité externe, identique ou différente, détenant un logiciel de débogage; également par exemple l'une par certains contacts électriques d'une interface physique ISO 7816 et l'autre par d'autres contacts de cette même interface physique), les deux canaux de communication peuvent être simultanés sur les deux liaisons physiques distinctes correspondantes.

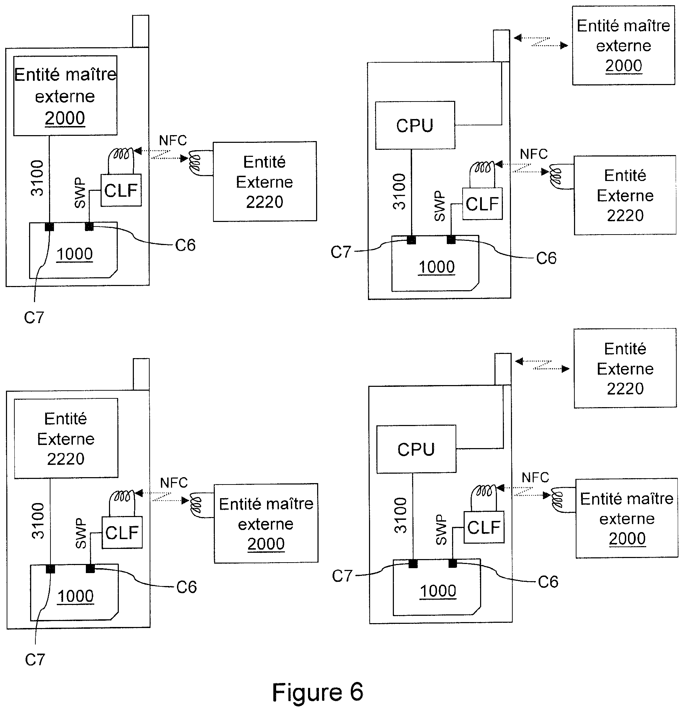

Egalement, comme illustré sur la **figure 6****,** la carte à microprocesseur, par exemple une carte SIM à contact ou tout circuit intégré, peut faire partie d'un équipement hôte, tel un téléphone mobile ou *smart phone.* Cet équipement hôte est doté d'un circuit CLF (*"ContactLess Frontend*") sans contact de type NFC, connecté au contact électrique C6 de la carte SIM. Cette dernière communique avec le circuit CLF à l'aide du protocole SWP (protocole à simple fil - *"Simple Wire Protocole"*)*,* permettant de communiquer sans contact avec une entité externe via le circuit CLF (ou en variante avec l'ordinateur 2000 décrit par la suite).

Dans cette configuration, l'un des canaux de communication (canal maître/esclave ou canal initié par la carte) est mis en oeuvre sur cette interface de communication sans contact (contact C6-SWP-CLF-NFC) et l'autre canal de communication peut être mis en oeuvre à l'aide du protocole classique ISO 7816 au niveau du contact C7 (I/O). De préférence, la communication sans contact NFC est initiée par la carte SIM.

Les différentes configurations représentées sur cette figure diffèrent en fonction de l'utilisation de l'un ou l'autre de ces canaux pour communiquer soit avec l'entité externe soit avec l'ordinateur maître 2000, et également en fonction de la mise en oeuvre de l'entité externe ou de l'ordinateur maître 2000 (selon le cas) à l'intérieur même du téléphone mobile ou par un équipement externe avec lequel le téléphone mobile communique via des moyens de communication mobile classiques.

En référence à la **figure 1** décrivant le "mode différé" une carte 1000 à microprocesseur 1300 comprend également une mémoire 1200, par exemple EEPROM, un module I/O de communication 1100 et une interface physique de connexion 1400 permettant au module 1100 de communiquer avec l'extérieur. La carte 1000 peut être un module matériel de sécurité permettant de protéger des données confidentielles, par exemple au travers de procédures d'authentification et/ou de cryptage.

Le module de communication 1100 est ici représenté par un module de communication ISO 7816 (référence 1110) permettant de communiquer avec un lecteur externe par messages APDU. Bien entendu, d'autres protocoles de communication (avec ou sans contact, USB, etc.) peuvent être envisagés dans le "mode différé" décrit ici. L'interface de connexion 1400 peut être à contact ou sans contact selon le cas de figure envisagé.

La mémoire 1200 comprend ici un système d'exploitation OS 1210 dont l'exécution par le microprocesseur 1300 définit un contexte d'exécution pour d'autres applications ou programmes. Elle comprend également le programme compilé 1220 incluant des instructions de débogage ID, objet du débogage selon l'invention, ainsi qu'un moyen 1230 d'activation ou d'inhibition des instructions de débogage et un fichier de débogage 1240.

A noter que le programme compilé 1220 à tester et à déboguer comprend un ensemble d'instructions I qui réalisent une ou plusieurs opérations OP et définissent la fonction première du programme en production, et comprend une ou plusieurs instructions de débogage ID introduites au milieu des instructions I. Les instructions de débogage ID n'ont aucun impact sur la réalisation de la fonction du programme, c'est-à-dire que leur exécution ou non pendant l'exécution du programme compilé n'a aucun effet sur l'exécution des instructions I et donc sur le résultat attendu du programme par l'application le sollicitant.

Dans un exemple particulier, le programme compilé peut être directement le système d'exploitation OS 1210, auquel cas les explications suivants seront adaptées au programme compilé OS 1210. L'environnement d'exécution est alors constitué des composants matériels de la carte et de leurs pilotes (ou *drivers*).

Le moyen 1230 peut simplement prendre la forme d'un dispositif à deux états '0' ou '1', par exemple au travers d'un bit B_{enable} (ou drapeau) en mémoire: B_{enable}=1 correspond à des instructions de débogage activées comme décrit par la suite (état dit "actif"), et B_{enable}=0 à des instructions désactivées (état dit "d'inhibition"). Le moyen 1230 peut toutefois prendre des formes plus complexes, comme par exemple une machine à états.

Un bus central (non représenté) relie les différents composants électroniques de la carte 1000 décrits précédemment, ainsi qu'une mémoire vive RAM (non représentée) dans laquelle sont chargées les instructions du programme compilé 1220 et celles de l'OS 1210 pour leurs exécutions par le microprocesseur 1300 lors de l'alimentation électrique de la carte 1000.

Un lecteur de carte 3010, ici de type ISO pour permettre un dialogue avec le module de communication 1110 selon la norme ISO 7816, est prévu pour recevoir la carte 1000. Sur la figure, on a illustré par la référence 3000 le lien physique de connexion entre la carte 1000 et le lecteur de carte 3010. A noter que dans certains modes de réalisation, ce lien physique peut correspondre à une communication sans contact ISO 14443.

Ce lecteur de carte 3010 équipe ou est relié à un équipement de test et de débogage, ici un simple ordinateur personnel PC 2000.

Cet ordinateur 2000 est de type classique et comprend, pour les besoins d'illustration de l'invention, un processeur CPU 2100, un écran d'affichage 2300 et une mémoire 2200, type disque dur (HD), contenant une application de test et de débogage 2210, laquelle contient notamment un script de test 2230 et un programme lecteur 2220 de fichier de débogage dit également "logiciel de débogage".

Le script de test 2230 peut consister en une séquence de commande ISO 7816 (commandes APDU) destinées à exécuter et piloter automatiquement le programme compilé 1220, et également d'autres fonctions de la carte 1000 (par exemple des commandes du système d'exploitation OS).

Le programme lecteur 2220 est configuré, quant à lui, pour lire un fichier de débogage tel que le fichier 1240 et pour afficher les informations de débogage à un utilisateur testeur, via l'écran 2300. Le programme lecteur 2220 peut être lancé automatiquement à la fin de l'exécution du script de test 2230, afin de rapatrier le fichier de débogage 1240 pour procéder à sa lecture et à son affichage.

En variante, une action de l'utilisateur testeur peut être requise.

Par ailleurs, le script de test 2230 et le programme lecteur 2220 peuvent être deux applications indépendantes, c'est-à-dire n'appartenant pas à une même application de test et de débogage 2210.

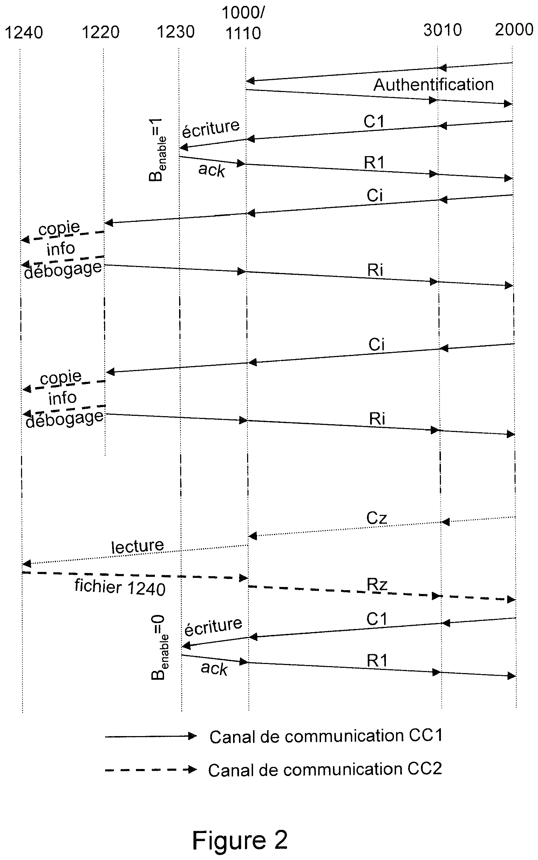

On décrit maintenant le processus de débogage à la demande de l'utilisateur testeur, en référence à la **figure 2****.** Sur cette figure, les pointes des flèches désignent les éléments intervenant soit dans le relais soit dans le traitement d'un message transmis.

L'utilisateur lance l'application 2210. Comme il s'agit d'une application de test et de débogage, les programmes à tester dans la carte 1000 doivent exécuter les instructions de débogage ID qu'ils contiennent.

A cet effet, l'application 2210 déclenche l'exécution d'un script de test 2230 qui envoie une première commande APDU C1, via le lecteur ISO 3010, à destination de la carte 1000 pour activer les instructions de débogage ID. Cette commande est transmise dans un premier canal de communication initié par le PC 2000 associé a lecteur 3010.

En variante cette commande C1 peut être envoyée par l'application de test 2210 avant de lancer le script de test 2230.

La commande C1 a pour effet de faire passer le dispositif à deux états 1230 à l'état actif: B_{enable}=1. A titre illustratif, cette commande C1 peut être une simple demande d'écriture du bit B_{enable}, à la valeur 1.

A noter que pour des questions de sécurité, une telle commande peut nécessiter une authentification préalable de l'utilisateur testeur (c'est-à-dire de l'ordinateur 2000) auprès de la carte 1000, par des mécanismes classiques. Ainsi, la carte 1000 ne sera autorisée à exécuter la commande C1 que si l'authentification s'est bien déroulée.

Après acquittement R1 de cette commande, la carte 1000 est prête pour le débogage du programme compilé 1220.

La suite du script de test 2230 est réalisée et a pour effet d'envoyer une séquence prédéfinie de commandes APDU Ci venant activer et piloter l'exécution du programme compilé 1220 en fonction d'éventuels paramètres de test prédéfinis.

Ces commandes Ci reproduisent un comportement possible d'une exploitation du programme compilé 1220 utilisé dans sa configuration de production. En d'autres termes, ces commandes n'ont trait qu'à la fonction ou opération première OP que le programme compilé 1220 met en oeuvre, et non aux instructions de débogage ID.

A réception par la carte 1000, ces commandes Ci sont traitées par l'exécution du programme compilé 1220 et génèrent des réponses APDU Ri.

Les commandes C1, Ci et réponses R1, Ri sont échangées entre le programme compilé 1220 et l'application de test 2210, au sein du canal de communication CC1 (maître/esclave) entre ces deux composants logiciels et initié par le PC 2000 ou lecteur 3010. Ce premier canal CC1 emprunte notamment le lien 3000.

Lors de l'exécution du programme compilé 1220, les instructions de débogage ID sont exécutées en raison de l'état actif B_{enable}=1 du moyen 1230.

Les instructions de débogage ID comprennent des traitements ne modifiant pas l'exécution des instructions I, par exemple il peut s'agir de récupérer une copie de valeurs de variables internes et/ou de la pile d'exécution courante mémorisant les instructions et les valeurs en cours.

Ces informations récupérées, ou "informations de débogage", sont copiées dans le fichier de débogage 1240. Le fichier de débogage 1240 peut notamment être mis en oeuvre sous forme de liste circulaire, éventuellement chaînée et/ou à entrées de longueur limitée, pour limiter la taille des informations de débogage en mémoire de la carte 1000. Cette configuration est notamment avantageuse pour des cartes à microprocesseur dotées de ressources mémoires limitées. Bien entendu d'autres réalisations, telle qu'un fichier linéaire ou un tableau, peuvent être envisagées.

La fonction de copie est notamment prévue au sein même des instructions de débogage ID.

Une fois le script de test 2230 totalement exécuté, le programme lecteur 2220 peut être lancé alors que le lien de communication ISO 3000 est désormais libre, libéré des communications APDU Ci/Ri.

Le programme lecteur 2220 envoie alors, automatiquement ou sur instruction de l'utilisateur testeur, une nouvelle commande APDU Cz aux fins d'obtenir copie du fichier de débogage 1240. A titre illustratif, cette commande Cz peut être une simple demande de lecture de ce fichier 1240.

Le fichier 1240 est obtenu par lecture de la mémoire 1200 par le système d'exploitation OS de la carte 1000. Le fichier de débogage 1240 est par conséquent envoyé (réponse Rz) au programme lecteur 2220, via le lien ISO 3000.

Comme il ressort de ce qui précède, ce mode de réalisation met en oeuvre une communication différée des informations de débogage par stockage temporaire de celles-ci dans le fichier de débogage 1240.

Dans cet exemple, les communications sont mises en oeuvre de façon successive sur le même lien physique 3000 reliant la carte 1000 au lecteur de carte 3010 et à l'ordinateur 2000.

A noter que dans un mode de réalisation sécurisé, le fichier de débogage 1240 et donc les informations de débogage qu'il contient peuvent être cryptés avant de sortir de la carte 1000 pour transmission sur le lien 3000.

Les informations de débogage ainsi récupérées par le programme lecteur 2220 sont exploitées localement pour en déduire d'éventuels dysfonctionnements et *bugs* du programme compilé afin de les corriger. A titre d'exemple, cette exploitation peut consister en l'affichage des informations de débogage (la valeur des variables internes ou de la pile d'exécution) à l'utilisateur via l'afficheur 2300.

L'exécution du script test 2230, du programme lecteur 2220 ou de l'application de test 2210 peut se finir par l'envoi d'une nouvelle commande (similaire à la commande C1) aux fins de faire basculer le dispositif 1230 à deux états vers l'état d'inhibition B_{enable}=0. Ainsi, si le programme compilé 1220 est à nouveau appelé pour une utilisation autre qu'un test et débogage, son exécution ne s'en trouvera pas allongée du fait des instructions de débogage ID.

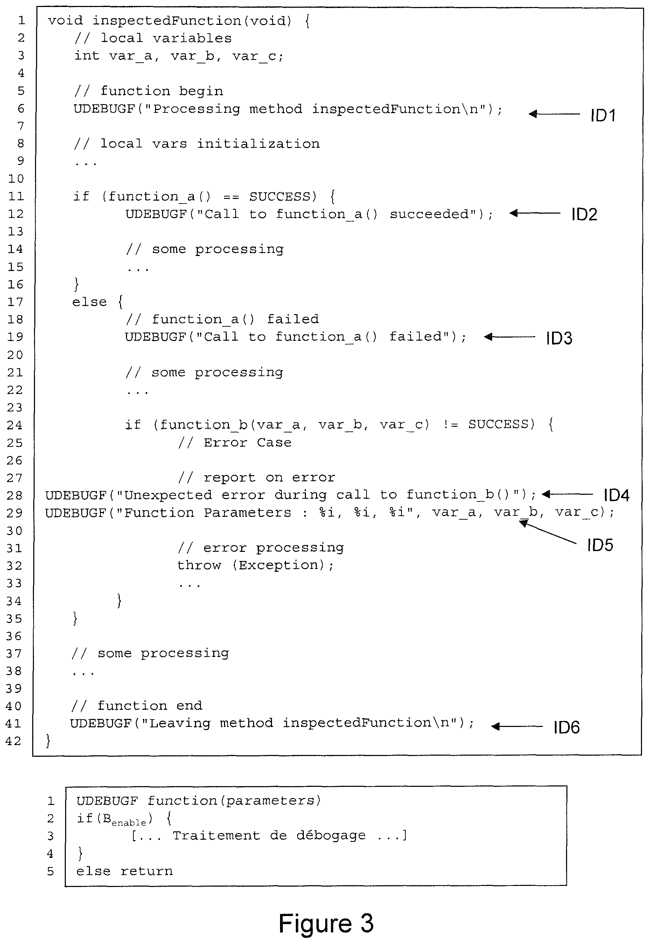

La **figure 3** illustre un exemple simplifié de programme compilé (dans sa version source) incluant des instructions de débogage ID.

Cet exemple a trait à une fonction *"inspectedFunction"* qui comprend des instructions I pour réaliser une fonction première du programme (non explicitées aux lignes 14 et 21 par exemple) et des instructions de débogage ID1 à ID6.

Dans cet exemple, les instructions de débogage ont pour objectif d'avertir de la réussite ou non de la fonction *function_a(),* et le cas échéant de remonter la valeur des variables locales var_a, var_b et var_c (ID5 en ligne 29). Les instructions ID1, ID2, ID3, ID4 et ID6 fournissent, au sein des informations de débogage, une indication de l'avancement des traitements de la fonction *inspectedFunction.*

On notera dans cet exemple que l'inhibition ou l'activation des instructions de débogage ID est mise en oeuvre à l'aide d'instructions conditionnelles sur la base du bit B_{enable}. En effet, la ligne 2 de la fonction UDEBUGF appelée par les instructions ID1-ID6 conditionne les traitements de débogage à la présence de B_{enable}=1. Ainsi, en l'absence d'activation des instructions de débogage, l'instruction UDEBUGF retourne simplement à la routine qui l'a appelée, ici à la fonction *inspectedFunction* au point courant.

A noter que c'est au sein de la fonction UDEBUGF (ligne 3) qu'est réalisée la copie, dans le fichier 1240, des chaines de caractères passées en paramètres de cette fonction.

Bien entendu, d'autres réalisations que l'instruction conditionnelle peuvent être envisagées.

En référence maintenant à la **figure 4** décrivant un "mode temps réel" selon l'invention, la carte 1000 est similaire à la carte de la **figure 1****,** si ce n'est qu'elle présente une connexion USB 3100 avec une interface entrée/sortie USB 3110 sur l'ordinateur 2000.

Pour cela, la carte 1000 comprend un module de communication 1120 de type Ethernet sur USB (en lieu et place du module ISO 7816 référencé 1110 sur la **figure 1****)** permettant notamment d'inclure un serveur web dans la carte 1000.

Il est à noter que de tels serveurs web sont couramment réalisés à l'aide de la norme Java, par exemple Javacard 3.0.

Un tel module de communication est ainsi configuré pour créer des *sockets* TCP ou UDP avec une entité distante dotée d'une adresse Ethernet ou IP.

Par ailleurs, le moyen 1230 à deux états est mis en oeuvre dans une mémoire programmable une seule fois OTPM 1200' (pour *"One Time Programmable Memory"*)*.* De ce fait, le moyen 1230 présente l'état activé (B_{enable}=1) par défaut. Bien entendu cette réalisation du moyen 1230 décrite en lien avec la **figure 4** peut être mise en oeuvre dans le mode indirect de la **figure 1****.** Vice et versa, la réalisation du moyen 1230 décrite précédemment dans le mode indirect peut être mise en oeuvre dans le présent mode direct.

De par la nature même de la mémoire OTPM, une commande d'inhibition des instructions de débogage ID (une commande C1 venant écrire B_{enable}=0) vient désactiver définitivement ces instructions car le bit B_{enable} ne pourra plus revenir à l'état 1. Cette configuration présente un avantage certain en ce qu'elle garantit que les informations secrètes dans la carte ne peuvent désormais plus être accessibles par une personne malintentionnée, via les mécanismes de débogage.

Ainsi, cette réalisation est principalement envisagée lorsque des tests doivent être menés tout de suite après la compilation du programme 1220, et lorsqu'il est prévu de rendre ce programme accessible à la production dès la fin des tests. L'inhibition définitive des instructions de débogage ID à la demande a ainsi lieu à la fin des tests à l'aide d'une simple commande C1 (éventuellement sécurisée par authentification).

Bien entendu, d'autres réalisations sont possibles comme par exemple décomposer le moyen 1230 en la combinaison d'un premier bit B1_{enable} en mémoire ROM réinscriptible pour activer ou désactiver les instructions de débogage ID pendant une phase de tests, et d'un second bit B2_{enable} en mémoire OTPM pour envisager la désactivation définitive des instructions ID le cas échéant.

L'utilisation de la mémoire OTPM seule requiert ainsi que l'application de test et de débogage 2210 n'envoie pas systématiquement les commandes C1 évoquées précédemment en lien avec la **figure 1****.** Seule une telle commande sera envoyée (une seule fois) lorsque les tests seront définitivement terminés.

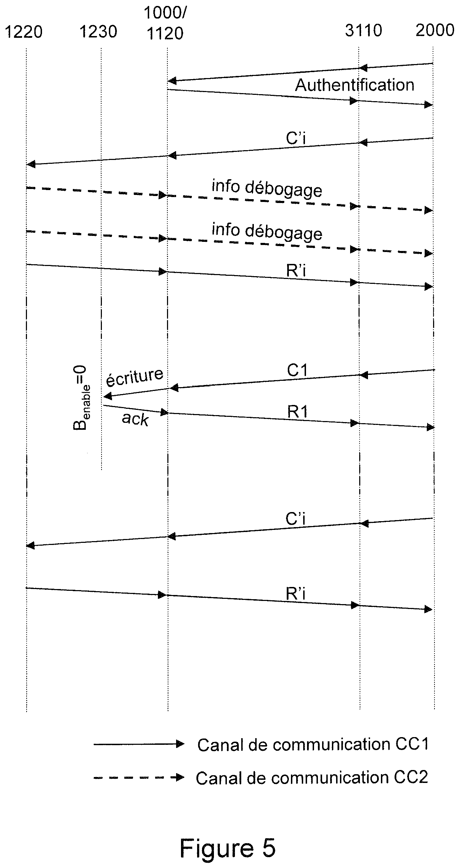

La **figure 5** illustre les échanges de données dans le mode "temps réel" selon l'invention. Sur cette figure, les pointes des flèches désignent les éléments intervenant soit dans le relais soit dans le traitement d'un message transmis.

Après une authentification classique optionnelle pour autoriser ou non la carte 1000 à exécuter toute commande envoyée par l'ordinateur 2000, le script de test 2230 envoie une séquence de commandes C'i par la connexion USB 3100, sur le canal maître/esclave CC1. Ici, ces commandes peuvent être incluses dans des requêtes http à destination du serveur web équipant la carte 1000.

Ces commandes C'i (une seule est représentée sur la figure) lance et pilote l'exécution du programme compilé 1220.

Comme B_{enable}=1, les instructions de débogage ID sont exécutées au cours de l'exécution du programme compilé.

Ces exécutions des instructions ID permettent de récupérer des informations de débogage, de créer, selon des mécanismes classiques, une *socket* UDP via la connexion USB 3100 avec le logiciel de débogage 2220, et d'envoyer ces informations de débogage (en une ou plusieurs fois) au logiciel de débogage 2220 via cette *socket.* A noter que cette socket peut être créée à la mise sous tension de la carte avant que le programme compilé ne soit exécuté.

Cet envoi est représenté sur la figure par le trait épais discontinu correspondant au canal CC2 initié par la carte et non pas le lecteur.

A noter que l'adresse Ethernet du logiciel de débogage (indiquée dans les paquets UDP transmis) est en mémoire de la carte 1000, par exemple mémorisée après transmission par l'application de test 2210 au début de son exécution.

Une exploitation des informations de débogage par le logiciel de débogage 2220 est alors possible comme décrit ci-dessus pour le mode différé. En outre, étant donné le formatage Ethernet des informations de débogage pour leur transport via la socket UDP, il est aisé de relayer ces données vers un équipement tiers distant de l'ordinateur 2000 via un réseau de communication, par exemple l'Internet.

A la fin de l'exécution de chaque commande Ci par la carte, une réponse R'i est envoyée à l'application de test 2210.

On parle de "mode temps réel" en raison de l'envoi immédiat des informations de débogage lors de l'exécution des instructions ID, alors même que l'exécution du programme compilé 1220 n'est pas terminée. Les deux canaux CC1 et CC2 peuvent donc être simultanés sur une même connexion USB.

Ultérieurement, lorsque les tests et le débogage sont terminés, une commande C1 peut être émise vers la carte pour désactiver (éventuellement définitivement) les instructions de débogage ID. Cela permet d'une part d'obtenir le programme compilé 1220 dans sa version de production sans que son exécution soit rallongée par celle des instructions ID, et d'autre part d'empêcher un éventuel accès interdit à des données secrètes qui seraient remontées via les informations de débogage puisque désormais de telles informations ne sont plus produites.

Cette commande C1 conduit à l'écriture B_{enable}=0 dans la mémoire OTPM 1200' et à son acquittement R1.

Comme montré sur la figure, désormais si de nouvelles commandes C'i sont émises, seules des réponses R'i seront communiquées à l'ordinateur 2000, et non des informations de débogage.

On peut également mettre en ouvre ce mode temps réel dans la configuration matérielle illustrée sur la **figure 6****,** puisque dans ce cas les deux canaux de communication sont physiquement distincts.

L'exemple de la **figure 3** s'applique également au mode direct ou temps réel. Dans ce cas, la fonction UDEBUGF comprend, au lieu d'instructions pour copier les informations de débogage dans le fichier 1240, des instructions pour écrire les informations de débogage au niveau de la *socket* UDP et ainsi les transmettre au programme lecteur 2220.

Les exemples qui précèdent ne sont que des modes de réalisation de l'invention aux fins de débogage, qui ne s'y limite pas.

En particulier, la carte à microprocesseur 1000 peut disposer d'une première connexion physique 3000, par exemple ISO 7816, avec un premier lecteur 3010 et d'une deuxième connexion physique 3100, par exemple USB, avec une interface USB 3110 (tous deux pouvant être reliés à un même ordinateur 2000 comportant l'application de test 2210). Les deux canaux CC1 et CC2 peuvent alors être mis en oeuvre chacun respectivement sur une des deux connexions physiques distinctes.

Par ailleurs, selon la nature des connexions physiques, il est possible de mettre en oeuvre au choix le mode temps réel ou le mode différé, décrits ci-dessus. C'est le cas des connexions USB par exemple. C'est aussi le cas pour une carte à microprocesseur disposant de deux connexions physiques distinctes.

Dans ce cas, le moyen 1230 d'activation ou d'inhibition peut présenter plus de deux états: un premier état B_{enable}=0 correspondant à la désactivation des instructions ID comme décrit précédemment, un deuxième état B_{enable}=1 correspondant à l'activation des instructions ID dans un mode indirect (utilisation du fichier de débogage 1240), et un troisième état B_{enable}=2 correspondant à l'activation des instructions ID dans un mode temps réel (*socket* UDP), par exemple.

Le choix entre le deuxième état et le troisième état (les deux états actifs B_{enable}≠0) peut être piloté par l'utilisateur ou être déterminé automatiquement en fonction des connexions disponibles et de leur état d'utilisation, avec par exemple une préférence pour le mode temps réel lorsque les deux modes sont disponibles.

Par ailleurs, plusieurs moyens d'inhibition ou d'activation peuvent coexister au sein du même module matériel de sécurité, un moyen pouvant être associé à un programme compilé donné, ou à un type d'instruction de débogage au sein d'un ou plusieurs programmes compilés contenant plusieurs de ces types d'instruction. L'homme du métier n'aura aucune difficulté à ajuster les enseignements décrits ci-dessus au cas où plusieurs moyens d'inhibition ou d'activation étaient présents.

A noter enfin que le protocole UDP peut être mis en oeuvre indifféremment sur des connexions présentant le protocole de couche physique USB, Bluetooth, ISO 7816 (part 1, définissant les caractéristiques physiques) et ISO 14443 (part 1 également).

La présente invention trouve également d'autres applications, par exemple pour l'accès à des données que mémorise la carte à microprocesseur, par exemple un fichier crypté volumineux.

Dans une telle application, l'entité externe 2000 souhaite accéder au contenu de ce fichier crypté et envoie, à cette fin, une commande APDU d'accès (lecture) à la carte 1000.

La réception de cette commande déclenche l'exécution d'un décryptage du fichier demandé puis la transmission des données décryptées correspondantes sur une socket UDP que la carte 1000 a créée au préalable.

Ainsi, ces données décryptées ne sont pas communiquées dans une réponse APDU dont la taille peut être limitée par la norme ISO 7816 ou ISO 14443.

La décision de transmettre sur la socket UDP plutôt qu'à l'aide d'une réponse APDU peut dépendre d'un traitement local à la carte aux fins de déterminer la taille du fichier crypté (ou des données décryptées) par rapport à une valeur seuil (fonction des limites de la norme ISO 7816 par exemple).

En variante, la carte 1000 peut être configurée pour transmettre, systématiquement, des données décryptées sur le canal de communication qu'elle initie (la socket UDP).

En variante encore, une machine à état (similaire au bit B_{enable} ci-dessus) peut être prévu pour activer ou inhiber (éventuellement de façon définitive) cette fonction d'accès par la socket UDP.

A noter enfin que les enseignements donnés ci-dessus pour le débogage et relatifs à la nature et au nombre de liaisons entre la carte 1000 et l'entité externe 2000 s'appliquent également à l'accès à un fichier crypté (et à toute donnée en mémoire de la carte): USB, ISO 7816, ISO 14443, SWP, NFC, Bluetooth, une liaison physique, plusieurs liaisons physiques parallèles, etc.

Les exemples qui précèdent ne sont que des modes de réalisation de l'invention, qui ne s'y limite pas.

## Revendications

1. Module matériel de sécurité (1000) comprenant un microprocesseur (1300), un module de communication (1100, 1400) et au moins une mémoire (1200), ladite au moins une mémoire comprenant un programme applicatif compilé (1220) exécutable par ledit microprocesseur pour réaliser une opération, ledit programme applicatif compilé comprenant au moins une instruction de débogage (ID1-ID6) dont l'exécution ou non ne modifie pas celle de ladite opération, le module matériel de sécurité étant configuré pour recevoir et transmettre sur un premier canal de communication (CC1), selon un mode de communication maître/esclave avec une entité maître externe (2230), au moins respectivement une commande de réalisation de l'opération et une réponse correspondante, **caractérisé en ce que** ledit module matériel de sécurité est en outre configuré pour :
- en réponse à la réception de la commande, exécuter ledit programme applicatif compilé de sorte à générer des données, dites de débogage, résultant de l'exécution de l'instruction de débogage,
- créer une socket de communication en mode non connecté avec une entité externe (2220) sur un deuxième canal de communication (CC2) initié par lui et différent dudit premier canal de communication, et
- transmettre, lors de l'exécution du programme applicatif compilé et à destination de l'entité externe (2220) via la socket de communication en mode non connecté, lesdites données de débogage générées lors de l'exécution du programme applicatif compilé.

2. Module matériel de sécurité selon la revendication 1, dans lequel les échanges maître/esclave et les données générées sont transmis sur deux liaisons physiques distinctes vers l'extérieur du module matériel de sécurité.

3. Module matériel de sécurité selon la revendication 1, dans lequel les échanges maître/esclave et les données générées sont transmis sur une même liaison physique.

4. Module matériel de sécurité selon l'une des revendications 1 à 3, dans lequel le mode de communication maître/esclave est conforme au standard ISO 7816 ou ISO 14443.

5. Module matériel de sécurité selon l'une des revendications 1 à 4, dans lequel, l'au moins une instruction de débogage met en oeuvre une commande d'écriture des données de débogage générées sur ladite socket de communication en mode non connecté créée par le module matériel de sécurité.

6. Module matériel de sécurité selon l'une des revendications 1 à 5 comprenant un moyen d'inhibition ou d'activation (1230) de l'instruction de débogage lors de l'exécution du programme applicatif compilé.

7. Module matériel de sécurité selon la revendication 6, dans lequel ledit moyen d'inhibition ou d'activation comprend une information mémorisée dans une mémoire programmable une seule fois (1200') de sorte qu'une inhibition de l'instruction de débogage soit définitive.

8. Module matériel de sécurité selon l'une des revendications 1 à 7, dans lequel la commande reçue de l'entité maître externe est une commande d'accès à un fichier crypté mémorisé en mémoire dudit module matériel sécurisé, et
les données générées transmises sur le canal de communication initié par le module matériel de sécurité sont des données décryptées dudit fichier.

9. Module matériel de sécurité selon l'une des revendications 1 à 8, dans lequel la socket de communication en mode non connecté est une socket UDP de communication de données sur le deuxième canal de communication.

10. Procédé de traitement dans un module matériel de sécurité (1000) comprenant un microprocesseur (1300) , un module de communication (1100, 1400) et au moins une mémoire (1200), ladite au moins une mémoire comprenant un programme applicatif compilé (1220) exécutable par ledit microprocesseur pour réaliser une opération, ledit programme applicatif compilé comprenant au moins une instruction de débogage (ID1-ID6) dont l'exécution ou non ne modifie pas celle de ladite opération, le module matériel de sécurité étant configuré pour recevoir et transmettre sur un premier canal de communication (CC1), selon un mode de communication maître/esclave avec une entité maître externe (2230), au moins respectivement une commande de réalisation de l'opération et une réponse correspondante, **caractérisé en ce qu'**il comprend les étapes suivantes réalisées par le module matériel de sécurité :
- en réponse à la réception de la commande, exécuter ledit programme applicatif compilé de sorte à générer des données, dites de débogage, résultant de l'exécution de l'instruction de débogage, au niveau du module matériel de sécurité,
- créer une socket de communication en mode non connecté avec une entité externe (2220) sur un deuxième canal de communication (CC2) initié par lui et différent dudit premier canal de communication, et
- transmettre, lors de l'exécution du programme applicatif compilé et à destination de l'entité externe (2220) via la socket de communication en mode non connecté, lesdites données de débogage générées lors de l'exécution du programme applicatif compilé.

11. Procédé de traitement selon la revendication 10, dans lequel les échanges maître/esclave et les données générées sont transmis sur deux liaisons physiques distinctes vers l'extérieur du module matériel de sécurité.

12. Procédé de traitement selon la revendication 10, dans lequel les échanges maître/esclave et les données générées sont transmis sur une même liaison physique.

13. Procédé de traitement, de type débogage, selon l'une des revendications 10 à 12, dans lequel le mode de communication maître/esclave est conforme au standard ISO 7816 ou ISO 14443.

14. Procédé de débogage selon l'une des revendications 10 à 13, dans lequel la socket de communication en mode non connecté est une socket UDP de communication de données sur le deuxième canal de communication.

15. Téléphone mobile comprenant une interface de communication sans contact et un module matériel de sécurité (1000) selon l'une des revendications 1 à 9, le module matériel de sécurité comprenant un premier contact électrique (C6) relié à ladite interface de communication sans contact, et dans lequel le canal de communication (CC1) avec l'entité maître externe (2000) et le canal de communication (CC2) initié par le module matériel de sécurité avec l'autre entité externe (2200) sont, l'un, conforme à une norme de communication sans contact via le premier contact électrique et, l'autre, conforme à une norme de communication avec contact via un deuxième contact électrique (C7) du module matériel de sécurité.

## Patentansprüche

1. Hardware-Sicherheitsmodul (1000), welches einen Mikroprozessor (1300), ein Kommunikationsmodul (1100, 1400) und wenigstens einen Speicher (1200) umfasst, wobei der wenigstens eine Speicher ein kompiliertes Anwendungsprogramm (1220) umfasst, das durch den Mikroprozessor ausführbar ist, um eine Operation durchzuführen, wobei das kompilierte Anwendungsprogramm wenigstens eine Debugging-Anweisung (ID1-ID6) umfasst, deren Ausführung oder Nichtausführung die Ausführung der Operation nicht beeinflusst, wobei das Hardware-Sicherheitsmodul dafür ausgelegt ist, auf einem ersten Kommunikationskanal (CC1) gemäß einem Master-Slave-Kommunikationsmodus mit einer externen Master-Entität (2230) wenigstens jeweils einen Befehl zur Durchführung der Operation und eine entsprechend Antwort zu empfangen bzw. zu senden, **dadurch gekennzeichnet, dass** das Hardware-Sicherheitsmodul außerdem dafür ausgelegt ist:
- in Reaktion auf den Empfang des Befehls das kompilierte Anwendungsprogramm auszuführen, um sogenannte Debugging-Daten zu erzeugen, die aus der Ausführung der Debugging-Anweisung resultieren,
- einen Socket zur Kommunikation im nicht verbundenen Modus mit einer externen Entität (2220) auf einem zweiten Kommunikationskanal (CC2) zu erzeugen, der von ihm initiiert wird und von dem ersten Kommunikationskanal verschieden ist, und
- bei der Ausführung des kompilierten Anwendungsprogramms und an die externe Entität (2220) über den Socket zur Kommunikation im nicht verbundenen Modus die Debugging-Daten zu senden, die bei der Ausführung des kompilierten Anwendungsprogramms erzeugt wurden.

2. Hardware-Sicherheitsmodul nach Anspruch 1, wobei die ausgetauschten Master-Slave-Nachrichten und die erzeugten Daten auf zwei verschiedenen physischen Verbindungen nach außerhalb des Hardware-Sicherheitsmoduls übertragen werden.

3. Hardware-Sicherheitsmodul nach Anspruch 1, wobei die ausgetauschten Master-Slave-Nachrichten und die erzeugten Daten auf ein und derselben physischen Verbindung übertragen werden.

4. Hardware-Sicherheitsmodul nach einem der Ansprüche 1 bis 3, wobei der Master-Slave-Kommunikationsmodus mit dem Standard ISO 7816 oder ISO 14443 konform ist.

5. Hardware-Sicherheitsmodul nach einem der Ansprüche 1 bis 4, wobei die wenigstens eine Debugging-Anweisung einen Befehl zum Schreiben der erzeugten Debugging-Daten auf dem Socket zur Kommunikation im nicht verbundenen Modus ausführt, der von dem Hardware-Sicherheitsmodul erzeugt wurde.

6. Hardware-Sicherheitsmodul nach einem der Ansprüche 1 bis 5, welches ein Mittel zur Blockierung oder Aktivierung (1230) der Debugging-Anweisung bei der Ausführung des kompilierten Anwendungsprogramms umfasst.

7. Hardware-Sicherheitsmodul nach Anspruch 6, wobei das Mittel zur Blockierung oder Aktivierung eine Information umfasst, die in einem einmalig programmierbaren Speicher (1200') gespeichert ist, so dass eine Blockierung der Debugging-Anweisung endgültig ist.

8. Hardware-Sicherheitsmodul nach einem der Ansprüche 1 bis 7, wobei der von der externen Master-Entität empfangene Befehl ein Befehl zum Zugriff auf eine verschlüsselte Datei ist, die im Speicher des gesicherten Hardwaremoduls gespeichert ist, und die erzeugten Daten, die auf dem von dem Hardware-Sicherheitsmodul initiierten Kommunikationskanal übertragen werden, entschlüsselte Daten der Datei sind.

9. Hardware-Sicherheitsmodul nach einem der Ansprüche 1 bis 8, wobei der Socket zur Kommunikation im nicht verbundenen Modus ein UDP-Socket zur Datenkommunikation auf dem zweiten Kommunikationskanal ist.

10. Verfahren zur Verarbeitung in einem Hardware-Sicherheitsmodul (1000), welches einen Mikroprozessor (1300), ein Kommunikationsmodul (1100, 1400) und wenigstens einen Speicher (1200) umfasst, wobei der wenigstens eine Speicher ein kompiliertes Anwendungsprogramm (1220) umfasst, das durch den Mikroprozessor ausführbar ist, um eine Operation durchzuführen, wobei das kompilierte Anwendungsprogramm wenigstens eine Debugging-Anweisung (ID1-ID6) umfasst, deren Ausführung oder Nichtausführung die Ausführung der Operation nicht beeinflusst, wobei das Hardware-Sicherheitsmodul dafür ausgelegt ist, auf einem ersten Kommunikationskanal (CC1) gemäß einem Master-Slave-Kommunikationsmodus mit einer externen Master-Entität (2230) wenigstens jeweils einen Befehl zur Durchführung der Operation und eine entsprechend Antwort zu empfangen bzw. zu senden, **dadurch gekennzeichnet, dass** es die folgenden Schritte umfasst, die von dem Hardware-Sicherheitsmodul ausgeführt werden:
- in Reaktion auf den Empfang des Befehls, Ausführen des kompilierten Anwendungsprogramms, um sogenannte Debugging-Daten zu erzeugen, die aus der Ausführung der Debugging-Anweisung resultieren, auf dem Hardware-Sicherheitsmodul,
- Erzeugen eines Sockets zur Kommunikation im nicht verbundenen Modus mit einer externen Entität (2220) auf einem zweiten Kommunikationskanal (CC2), der der von ihm initiiert wird und von dem ersten Kommunikationskanal verschieden ist, und
- Senden, bei der Ausführung des kompilierten Anwendungsprogramms und an die externe Entität (2220) über den Socket zur Kommunikation im nicht verbundenen Modus, der Debugging-Daten, die bei der Ausführung des kompilierten Anwendungsprogramms erzeugt wurden.

11. Verfahren zur Verarbeitung nach Anspruch 10, wobei die ausgetauschten Master-Slave-Nachrichten und die erzeugten Daten auf zwei verschiedenen physischen Verbindungen nach außerhalb des Hardware-Sicherheitsmoduls übertragen werden.

12. Verfahren zur Verarbeitung nach Anspruch 10, wobei die ausgetauschten Master-Slave-Nachrichten und die erzeugten Daten auf ein und derselben physischen Verbindung übertragen werden.

13. Verfahren zur Verarbeitung vom Typ eines Debuggings nach einem der Ansprüche 10 bis 12, wobei der Master-Slave-Kommunikationsmodus mit dem Standard ISO 7816 oder ISO 14443 konform ist.

14. Debugging-Verfahren nach einem der Ansprüche 10 bis 13, wobei der Socket zur Kommunikation im nicht verbundenen Modus ein UDP-Socket zur Datenkommunikation auf dem zweiten Kommunikationskanal ist.

15. Mobiltelefon, welches eine Schnittstelle zur kontaktlosen Kommunikation und ein Hardware-Sicherheitsmodul (1000) nach einem der Ansprüche 1 bis 9 umfasst, wobei das Hardware-Sicherheitsmodul einen ersten elektrischen Kontakt (C6) umfasst, der mit der Schnittstelle zur kontaktlosen Kommunikation verbunden ist, und wobei von dem Kommunikationskanal (CC1) mit der externen Master-Entität (2000) und dem von dem Hardware-Sicherheitsmodul initiierten Kommunikationskanal (CC2) mit der anderen externen Entität (2200) der eine mit einer Norm für kontaktlose Kommunikation über den ersten elektrischen Kontakt konform ist und der andere mit einer Norm für kontaktbehaftete Kommunikation über einen zweiten elektrischen Kontakt (C7) des Hardware-Sicherheitsmoduls konform ist.

## Claims

1. Hardware security module (1000) comprising a microprocessor (1300), a communication module (1100, 1400) and at least one memory (1200), said at least one memory comprising a compiled application program (1220) able to be executed by said microprocessor in order to carry out an operation, said compiled application program comprising at least one debugging instruction (ID1-ID6) which, whether or not it is executed, does not modify the execution of said operation, the hardware security module being configured to receive and transmit, over a first communication channel (CC1), according to a master-slave mode of communication with an external master entity (2230), at least respectively one command to carry out the operation and one corresponding response, **characterized in that** said hardware security module is moreover configured for:
- in response to the receipt of the command, executing said compiled application program so as to generate data, called debugging data, resulting from the execution of the debugging instruction,
- creating a communication socket in connectionless mode for communication with an external entity (2220) over a second communication channel (CC2) initiated by it and different from said first communication channel, and
- transmitting, during the execution of the compiled application program and to the external entity (2220) via the communication socket in connectionless mode, said debugging data generated during the execution of the compiled application program.

2. Hardware security module according to Claim 1, wherein the master-slave exchanges and the generated data are transmitted over two different physical links to outside the hardware security module.

3. Hardware security module according to Claim 1, wherein the master-slave exchanges and the generated data are transmitted over the same physical link.

4. Hardware security module according to one of Claims 1 to 3, wherein the master-slave communication mode is compliant with the ISO 7816 or ISO 14443 standard.

5. Hardware security module according to one of Claims 1 to 4, wherein the at least one debugging instruction implements a command to write the generated debugging data over said communication socket in connectionless mode created by the hardware security module.

6. Hardware security module according to one of Claims 1 to 5, comprising a means (1230) of inhibition or activation of the debugging instruction during the execution of the compiled application program.

7. Hardware security module according to Claim 6, wherein said inhibition or activation means comprises an item of information stored in a one-time programmable memory (1200') so that inhibition of the debugging instruction is definitive.

8. Hardware security module according to one of Claims 1 to 7, wherein the command received from the external master entity is a command to access an encrypted file stored in the memory of said secure hardware module, and
the generated data transmitted over the communication channel initiated by the hardware security module are decrypted data of said file.

9. Hardware security module according to one of Claims 1 to 8, wherein the communication socket in connectionless mode is a UDP socket for communicating data over the second communication channel.

10. Processing method in a hardware security module (1000) comprising a microprocessor (1300), a communication module (1100, 1400) and at least one memory (1200), said at least one memory comprising a compiled application program (1220) able to be executed by said microprocessor in order to carry out an operation, said compiled application program comprising at least one debugging instruction (ID1-ID6) which, whether or not it is executed, does not modify the execution of said operation, the hardware security module being configured to receive and transmit, over a first communication channel (CC1), according to a master-slave mode of communication with an external master entity (2230), at least respectively one command to carry out the operation and one corresponding response, **characterized in that** it comprises the following steps, carried out by the hardware security module:
- in response to the receipt of the command, executing said compiled application program so as to generate data, called debugging data, resulting from the execution of the debugging instruction, at the hardware security module,
- creating a communication socket in connectionless mode for communication with an external entity (2220) over a second communication channel (CC2) initiated by it and different from said first communication channel, and
- transmitting, during the execution of the compiled application program and to the external entity (2220) via the communication socket in connectionless mode, said debugging data generated during the execution of the compiled application program.

11. Processing method according to Claim 10, wherein the master-slave exchanges and the generated data are transmitted over two different physical links to outside the hardware security module.

12. Processing method according to Claim 10, wherein the master-slave exchanges and the generated data are transmitted over the same physical link.

13. Processing method, of the debugging type, according to one of Claims 10 to 12, wherein the master-slave communication mode is compliant with the ISO 7816 or ISO 14443 standard.

14. Debugging method according to one of Claims 10 to 13, wherein the communication socket in connectionless mode is a UDP socket for communicating data over the second communication channel.

15. Mobile telephone comprising a contactless communication interface and a hardware security module (1000) according to one of Claims 1 to 9, the hardware security module comprising a first electrical contact (C6) linked to said contactless communication interface, and wherein the communication channel (CC1) for communication with the external master entity (2000) and the communication channel (CC2) initiated by the hardware security module for communication with the other external entity (2200) are, in the case of one of them, compliant with a contactless communication standard via the first electrical contact and, in the case of the other one, compliant with a contact communication standard via a second electrical contact (C7) of the hardware security module.
